# EUROPEAN PATENT SPECIFICATION

(11) **EP 2 806 012 B1**
(45) Date of publication and mention of the grant of the patent: **28.11.2018**
(21) Application number: 13738780.9
(22) Date of filing: 17.01.2013
(51) Int. Cl.: C09K 19/52, C09K 19/20, B29C 41/00, C08J 5/18, C09K 19/34, C09K 19/38, C09K 19/54, C09K 19/04

(54) **LIQUID CRYSTAL COMPOSITION**
FLÜSSIGKRISTALLZUSAMMENSETZUNG
COMPOSITION DE CRISTAUX LIQUIDES

(30) Priority: 17.01.2012 KR 20120005386
(43) Date of publication of application: 26.11.2014
(73) Proprietor: LG Chem, Ltd., Seoul 150-721 (KR)
(72) Inventor: RYU, Su Young, 305-380, Daejeon (KR); PARK, Moon Soo, Daejeon 302-777 (KR)
(74) Representative: Goddar, Heinz J.
(86) International application number: PCT/KR2013/000375
(87) International publication number: WO 2013/109070

(56) References cited:
- EP-A1- 2 070 918
- EP-A1- 2 399 942
- EP-A2- 1 286 188
- JP-A- 2003 066 214
- KR-A- 20090 075 346
- KR-B1- 101 050 139
- KR-B1- 101 095 695
- KR-B1- 101 095 695

## Description

### TECHNICAL FIELD

The present application relates to a liquid crystal composition, a liquid crystal film, a method for preparing the liquid crystal film, and a display device.

### BACKGROUND

There is a continuously increasing demand for manufacturing a thinner, lighter and wider display device such as liquid crystal display (LCD), plasma display panel (PDP), or the like, and studies intended to improve screen uniformity, contrast ratio, viewing angle, and the like have also been conducted in order to implement a higher quality image.

Optical films including brightness enhancement films, phase difference films, viewing angle compensation films, or the like may be used to reduce the change in color, secure a viewing angle, and enhance brightness, and the like.

Among these optical films, stretched films to which optical anisotropy is imparted by stretching a polymer film are known, and methods of using the optical anisotropy of a liquid crystal film prepared by curing a polymerizable liquid crystal compound are also known.

Liquid crystal molecules may be divided into rod-like liquid crystals and disc-like liquid crystals according to their shapes. There are various shapes of alignments of the rod-like liquid crystals, which include homogeneous, homeotropic, tilted, splay, cholesteric alignments, or the like, and thus it is possible to exhibit optical properties that cannot be obtained from a stretched film. For example, it is possible to secure a wider variety of physical properties by applying a polymerizable liquid crystal compound on the stretched film and then imparting various liquid crystal alignment characteristics. As a method for aligning liquid crystals, a rubbing method or light alignment method is used. A liquid crystal compound may be blended with a solvent and applied on an alignment layer formed by a rubbing method or light alignment method. Thereafter, liquid crystals may be aligned after the solvent blended for applying the liquid crystal compound is dried. However, since the liquid crystal compound has low fluidity after the solvent is dried, it is difficult to align liquid crystals according to an alignment layer present at a lower portion.

Also, display devices, for example, liquid crystal display devices are classified into various modes, such as twisted nematic (TN), super twisted nematic (STN), vertical alignment (VA), or in-plane switching (IPS) modes according to the arrangement of liquid crystal molecules in a liquid crystal panel. Accordingly, each liquid crystal panel has its own intrinsic arrangement, and thus there are also differences in optical anisotropy among the liquid crystal panels. The optical anisotropy of the liquid crystal panel is determined according to the arrangement of liquid crystal molecules, and thus an effort to make the arrangement of liquid crystal molecules more uniformly is needed.
EP 2 399 942 A1 discloses a polymerizable liquid crystal composition used for the production of optical compensation films such as liquid crystal displays. A polymerizable liquid crystal solution is disclosed comprising 99.0% of the polymerizable liquid crystal composition and 1.0% of a non-liquid crystalline polymerizable compound. The viscosity of the polymerizable liquid crystal composition is preferably 100 mPa.s or less, and the non-liquid crystalline polymerizable compound is not in the form of a crystal, but is in the form of a solution at 25°C.

EP 2 070 918 A1 discloses a bifunctional polymerizable compound, an additive for a polymerizable composition, a polymerizable composition and a polymerizable liquid crystal composition.

KR 101 095 695 B1 discloses a liquid crystalline composition comprising 25 wt.-% of a polymerizable liquid crystal compound and 30 wt.-% of a compound having a melting point of 20°C or less.

EP 1 286 188 A2 discloses a cholesteric liquid crystal color filter used in displays. Disclosed is the formation of a photosensitive resin layer/film (cholesteric liquid crystal layer/film) comprising a polymerizable liquid crystal compound and dipentaerythritol hexaacrylate.

### DESCRIPTION

### TECHNICAL OBJECT

The present application provides a liquid crystal composition, a liquid crystal film, a method for preparing the liquid crystal film, and a display device.

### TECHNICAL SOLUTION

One aspect of the present application provides a liquid crystal composition having a viscosity of 1,500 mPa·s (cps) to 2,500 mPa·s (cps) at normal temperature in a state where the liquid crystal composition does not comprise a solvent, the liquid crystal composition comprising:
a liquid crystal compound represented by the following Formula C; and
a compound having a melting point of 20°C or less,
wherein the compound having a melting point of 20°C or less is represented by the following Formula 3: 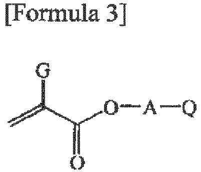
in Formula 3, G is a hydrogen atom or an alkyl group, A is an alkylene group or an alkylidene group, and Q is a monovalent heterocyclic compound

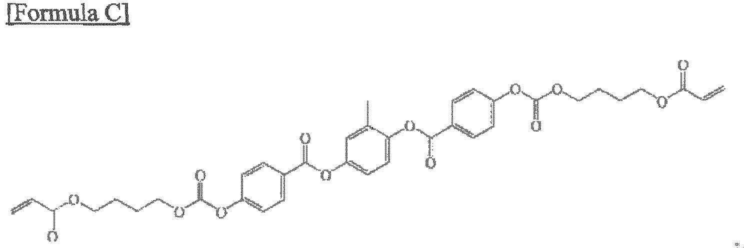

The liquid crystal composition may be uniformly coated at normal temperature without any need to add heat. Accordingly, the use of the liquid crystal composition is economical in terms of process and may allow an equipment to be simply manipulated. In the present specification, the term "normal temperature" refers to natural temperature without being warmed or cooled, and may refer to a temperature, for example, about 15°C to about 35°C, about 20°C to about 25°C, about 25°C, or about 23°C.

In addition, an appropriate fluidity in the liquid crystal composition may be secured even after a solvent and the like to be blended for coatability are dried, and thus uniform alignment may be induced. In an illustrative embodiment of the present application, the liquid crystal composition may have a viscosity of 1,500 mPa.s (cps) to 2,500 mPa.s (cps) at normal temperature. The viscosity may be a viscosity in a state where the liquid crystal composition does not include a solvent. The liquid crystal composition may be typically blended with a solvent and coated. Accordingly, the above-described viscosity may be a viscosity at normal temperature, which is measured by using a coating layer obtained by drying the solvent blended after the liquid crystal composition is coated. The drying condition is not particularly limited, and the drying may be performed such that the solvent may be substantially removed. The drying condition may be appropriately controlled in consideration of, for example, solid components and the like of the liquid crystal composition. The liquid crystal composition having such a viscosity range may induce a uniform alignment due to the appropriate fluidity as described above. In addition, the liquid crystal composition having the viscosity range may achieve a uniform liquid crystal alignment even while liquid crystals are aligned in a wide area, and may provide a liquid crystal layer having excellent film quality.

In the present specification, the symbol 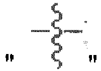 may mean that a moiety is bound to a mother compound. For example, 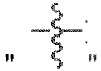 on the left of B in Formula 2 may mean that B is directly bound to the benzene of Formula 1.

In the present specification, the term "single bond" may mean that no separate atom or atomic group is present at a corresponding site. For example, the term "single bond" in Formulas 1 and 2 means the case in which no separate atom is present at a part represented by A or B. For example, when A in Formula 1 is a single bond, benzene rings disposed on both sides of A may be directly bound to each other to form a biphenyl structure.

In the present specification, examples of the halogen include fluorine, chlorine, bromine, iodine, or the like.

In the present specification, unless otherwise defined, examples of the alkyl group include a linear or branched alkyl group having 1 to 20 carbon atoms, 1 to 16 carbon atoms, 1 to 12 carbon atoms, 1 to 8 carbon atoms, or 1 to 4 carbon atoms, or a cycloalkyl group having 3 to 20 carbon atoms, 3 to 16 carbon atoms, 3 to 12 carbon atoms, 3 to 8 carbon atoms, or 3 to 6 carbon atoms. The alkyl group may be arbitrarily substituted with one or more substituents.

In the present specification, unless otherwise defined, examples of the alkoxy group include an alkoxy group having 1 to 20 carbon atoms, 1 to 16 carbon atoms, 1 to 12 carbon atoms, 1 to 8 carbon atoms, or 1 to 4 carbon atoms. The alkoxy group may be linear, branched, or cyclic. In addition, the alkoxy group may be arbitrarily substituted with one or more substituents.

Also, in the present specification, unless otherwise defined, examples of the alkylene group or alkylidene group include an alkylene group or alkylidene group having 1 to 20 carbon atoms, 1 to 16 carbon atoms, 1 to 12 carbon atoms, 1 to 8 carbon atoms or 1 to 4 carbon atoms, 3 to 20 carbon atoms, 3 to 16 carbon atoms, 3 to 12 carbon atoms, or 3 to 8 carbon atoms. The alkylene group or alkylidene group may be linear, branched, or cyclic. The cyclic alkylene group or alkylidene group may be an alkylene group or alkylidene group including an aliphatic cyclic structure. In the aliphatic cyclic structure, one or two or more rings may be present. The two or more rings may include the case in which one or two or more carbon atoms are included as a common component in two or more different rings. The alkylene group or alkylidene group may be arbitrarily substituted with one or more substituents.

In addition, in the present specification, unless otherwise defined, examples of the alkenyl group include an alkenyl group having 2 to 20 carbon atoms, 2 to 16 carbon atoms, 2 to 12 carbon atoms, 2 to 8 carbon atoms, or 2 to 4 carbon atoms. The alkenyl group may be linear, branched, or cyclic. Also, the alkenyl group may be arbitrarily substituted with one or more substituents.

In the present specification, examples of the substituent that may be substituted with any compound or a substituent include an alkyl group, an alkoxy group, an alkenyl group, an epoxy group, a cyano group, a carboxyl group, an acryloyl group, a methacryloyl group, an acryloyloxy group, a methacryloyloxy group, an aryl group, or the like, but are not limited thereto.

The nematic range of the liquid crystal compound is not particularly limited. In an illustrative embodiment of the present application, a liquid crystal compound having a nematic range of 5°C or more may be adopted as the liquid crystal compound. Also, the upper limit of the nematic range of the liquid crystal compound is not particularly limited, but may be, for example, 200°C or less. In the present specification, the term "nematic range" may refer to a temperature at which the liquid crystal compound is transferred to the nematic phase. The present application may include such a liquid crystal compound to provide a liquid crystal composition having excellent coatability and excellent fluidity after drying. Also, the liquid crystal composition may provide a liquid crystal layer with excellent quality.

The liquid crystal composition includes a compound having a melting point of 20°C or less (hereinafter referred to as a compound L). The compound L may impart excellent coatability and excellent fluidity after drying to the liquid crystal composition. Accordingly, the compound L may enable the liquid crystal composition to be uniformly aligned after the liquid crystal composition is coated.

In an illustrative embodiment of the present application, a compound that is in a liquid state at normal temperature may be used as the compound L. The compound L in a liquid state may increase the fluidity of the liquid crystal composition to impart excellent coatability. In addition, the compound L may enable the liquid crystal composition to be uniformly aligned after the liquid crystal composition is coated. The melting point of the compound L for exhibiting the effect may be, for example, 15°C or less, 10°C or less, or 5°C or less. Also, when the compound L is in a gas state at normal temperature, it is substantially impossible to blend the compound L in the liquid crystal composition, and thus a liquid crystal composition having an appropriate boiling point may be used. For example, the boiling point of the compound L may be about 10°C or more, 15°C or more, 20°C or more, 25°C or more, 30°C or more, 35°C or more, or 40°C or more.

In another illustrative embodiment of the present application, a compound having low viscosity at normal temperature may be used as the compound L. When a compound having low viscosity is used as the compound L, the fluidity of the liquid crystal composition may be increased, thereby imparting excellent coatability. The viscosity of the compound L for exhibiting the effect may be, for example, 1 to 200 cps. The viscosity may be a viscosity at normal temperature.

The use of a compound having the above-described temperature and viscosity as the compound facilitates securing the fluidity of the liquid crystal composition after being dried.

In an illustrative embodiment of the present application, the compound L may be a non-liquid crystal compound.

In the present application a compound represented by the following Formula 3 is used as the compound L.

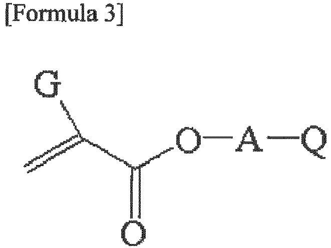

In Formula 3, G is a hydrogen atom or an alkyl group, A is an alkylene group or an alkylidene group, and Q is a monovalent heterocyclic compound.

In the present specification, the term "monovalent heterocyclic compound" may refer to a monovalent residue derived from a ring-shaped organic compound, and specifically, an organic compound in which the ring is formed of carbon and an atom (heteroatom) other than carbon unless otherwise defined. The monovalent heterocyclic compound as described above may have, for example, 3 to 20,3 to 16,3 to 12, or 3 to 8 ring constituent atoms. Examples of the heteroatom include oxygen, nitrogen, sulfur, and the like and appropriately oxygen or nitrogen, or oxygen, and one or two of the ring constituent atoms may be the heteroatom. The monovalent heterocyclic compound may be arbitrarily substituted with one or more substituents.

The compound may be, for example, a compound in Formula 3, in which A is an alkylene group or alkylidene group having 1 to 20 carbon atoms, and Q is a monovalent heterocyclic compound having 3 to 8 ring constituent atoms and including an oxygen atom or a nitrogen atom as a heteroatom.

In an illustrative embodiment of the present application, the compound may be a compound in Formula 3, in which A is a linear or branched alkylene group or alkylidene group having 1 to 4 carbon atoms, and Q is a monovalent heterocyclic compound having 3 to 8 rings constituent atoms and comprising an oxygen atom or a nitrogen atom as a hetero atom.

The ratio of the compound L in the liquid crystal composition is not particularly limited and may be selected in consideration of a desired effect. In an illustrative embodiment of the present application, the compound L may be included in a ratio of 0.1 to 70 parts by weight based on 100 parts by weight of the liquid crystal compound. Also, in another illustrative embodiment of the present application, the compound L may be included in a ratio of 0.1 to 60 parts by weight, 0.1 to 50 parts by weight, 0.1 to 40 parts by weight, 0.1 to 30 parts by weight, 0.1 to 20 parts by weight, 0.1 to 18 parts by weight, 0.1 to 16 parts by weight, 0.1 to 14 parts by weight, 0.1 to 12 parts by weight, 0.1 to 10 parts by weight, 0.1 to 8 parts by weight, 1 to 70 parts by weight, 1 to 50 parts by weight, 1 to 20 parts by weight, 3 to 20 parts by weight, 1 to 14 parts by weight, or 3 to 10 parts by weight, based on 100 parts by weight of the liquid crystal compound. It is possible to secure efficient and uniform alignment and alignment stability of the liquid crystal compound within the ratio range. However, the range is not limited thereto, and it is possible to use a range of approximately 20 to 70 parts by weight or 50 to 70 parts by weight based on 100 parts by weight of the liquid crystal compound as long as the influence thereof on the liquid crystal alignment property is negligibly small according to the type of the compound L. In the present specification, unless otherwise defined, the unit "part by weight" may refer to a ratio of the weight.

When the liquid crystal compound is a polymerizable liquid crystal compound, the liquid crystal composition may additionally include, for example, a radical initiator or cationic initiator. A free radical initiator that is useful in the reaction or polymerization of the polymerizable liquid crystal compound is well known. Examples of a suitable free radical photoinitiator include: amino ketones, such as 2-methyl-1-[4-(methylthio)phenyl]-2-(4-morpholinyl)-1-propanone, 2-benzyl-2-(dimethylamino)-1-[4-(4-morpholinyl)phenyl]-1-butanone, and the like; benzoin ethers, such as benzoin methyl ether, benzoin isopropyl ether, and the like; substituted benzoin ethers, such as anisoin methyl ether and the like; substituted acetophenones, such as 2,2-diethoxyacetophenone, 2,2-dimethoxy-2-phenylacetophenone, and the like; substituted α-ketols, such as 2-methyl-2-hydroxypropiophenone and the like; aromatic phosphine oxides, such as bis(2,4,6-trimethylbenzoyl)phenyl phosphine oxide and the like; aromatic sulfonyl chlorides, such as 2-naphthalene-sulfonyl chloride and the like; photoactive oximes, such as 1-phenyl-1,2-propanedione-2(O-ethoxycarbonyl) oxime and the like; and the like, and mixtures thereof, but are not limited thereto.

Examples of a useful thermal free radical initiator include: azo compounds, such as 2,2'-azo-bis(isobutyronitrile), dimethyl 2,2'-azo-bis(isobutyrate), azo-bis(diphenyl methane), 4-4'-azo-bis(4-cyanopentanoic acid) and the like; peroxides, such as hydrogen peroxide, benzoyl peroxide, cumyl peroxide, tert-butyl peroxide, cyclohexanone peroxide, glutaric acid peroxide, lauroyl peroxide, methyl ethyl ketone peroxide and the like; hydroperoxides, such as tert-butyl hydroperoxide, cumene hydroperoxide and the like; peracids, such as peracetic acid, perbenzoic acid, potassium persulfate, ammonium persulfate and the like; peresters, such as diisopropyl percarbonate and the like; thermal redox initiators and the like; and the like, and mixtures thereof, but are not limited thereto.

In an illustrative embodiment of the present application, as the free radical initiator, a free radical photoinitiator may be used in consideration of general use and easiness of simultaneous initiation, solvent-less processability, and storage stability, and the like. For the aforementioned reason, as the free radical photoinitiator, it is possible to use, for example, a free radical photoinitiator selected from amino ketones, substituted acetophenones, aromatic phosphine oxides, and mixtures thereof.

As the cationic initiator, an initiator known in the art may also be used. Examples of a useful cationic photoinitiator include various useful materials known in the art, for example, an onium salt, a specific organic metal complex, and the like, and mixtures thereof. Examples of a useful onium salt include an onium salt having a structural formula AX, where A is an organic cation (selected from, for example, diazonium, iodonium, and sulfonium cations, and specifically may be selected from diphenyliodonium, triphenylsulfonium, and phenylthiophenyl diphenylsulfonium), and X is an anion (for example, organic sulfonate or metal or metalloid halide). In particular, examples of the useful onium salt include aryl diazonium salts, diaryl iodonium salts, and triaryl sulfonium salts, but are not limited thereto. Examples of a useful cationic thermal initiator include quaternary ammonium salts (for example, a quaternary ammonium salt of SbF₆) of imidazole and superacid, and the like, and mixtures thereof. In an illustrative embodiment of the present application, as the cationic initiator, a cationic photoinitiator may be used in consideration of general use and easiness of simultaneous initiation, solvent-less processability, and storage stability. Among the cationic photoinitiators, it is possible to use a cationic photoinitiator selected from onium salts and mixtures thereof for the aforementioned reason.

The specific ratio of the radical initiator or cationic initiator is not particularly limited, and an appropriate ratio may be selected according to the purpose. For example, the initiator may be included in a ratio of 0.01 to 20 parts by weight based on 100 parts by weight of the liquid crystal compound, but the ratio is not limited thereto. When the ratio of the initiator is extremely low, an appropriate polymerization may not be derived, and when the ratio thereof is extremely high, physical properties may deteriorate due to a residual initiator after a liquid crystal layer is formed, and thus an appropriate ratio may be selected in consideration of these circumstances.

The liquid crystal composition may additionally include a surfactant. Examples of the surfactant include fluorocarbon-based or silicone-based surfactants. Examples of a fluorocarbon-based surfactant include Fluorad FC4430, Fluorad FC4432, and Fluorad FC4434 from US 3M Corp., and Zonyl from US Dupont Corp., and the like, and examples of the silicone-based surfactant include BYK and the like from BYK-Chemie Corp., but the surfactants are not limited thereto.

The ratio of the surfactant is not particularly limited, and the surfactant may be included in an amount of approximately 0.05 to 5 parts by weight based on 100 parts by weight of a homogeneously aligned liquid crystal compound. When the ratio of the surfactant is extremely low, the surface state of the liquid crystal layer may become poor, and when the ratio is extremely high, a stain may be generated by the surfactant, and thus an appropriate ratio may be selected in consideration of these circumstances.

The liquid crystal composition may additionally include a solvent. Examples of the solvent include: halogenated hydrocarbons, such as chloroform, dichloromethane, tetrachloroethane, trichloroethylene, tetrachloroethylene, chlorobenze, and the like; aromatic hydrocarbons, such as benzene, toluene, xylene, methoxybenzene, 1,2-dimethoxybenzene, and the like; ketone-based solvents, such as acetone, methyl ethyl ketone, cyclohexanone, cyclopentanone, and the like; cellosolves, such as methyl cellosolve, ethyl cellosolve, butyl cellosolve, and the like; or ethers, such as diethylene glycol dimethyl ether (DEGDME), dipropylene glycol dimethyl ether (DPGDME), and the like; and the like, but are not limited thereto. The solvent may also be included in the form of a single solvent or a mixed solvent. The ratio of the solvent in the liquid crystal composition is not particularly limited, and the solvent may be included in an appropriate ratio in consideration of a desired effect, for example, coatability and the like.

The liquid crystal composition may additionally include known additives, for example, a stabilizer or a non-polymerizable non-liquid crystal compound and the like in addition to the aforementioned additives, if necessary.

Another aspect of the present application provides a liquid crystal film (LCF). An illustrative liquid crystal film may have a liquid crystal layer formed from the above-described liquid crystal composition.

The liquid crystal compound in the liquid crystal layer may be included in an aligned state. The compound may be polymerized, for example, in a homogeneous, homeotropic, tilted, splay, or cholesteric alignment state, and included in the liquid crystal layer.

In an illustrative embodiment of the present application, the liquid crystal compound may be included in a homogeneously aligned state. In the present specification, the term "homogeneously aligned" may mean that the optical axis of the liquid crystal layer including the liquid crystal compound has an inclination angle of about 0° to about 25°, about 0° to about 15°, about 0° to about 10°, about 0° to about 5°, or about 0° with respect to the plane of the liquid crystal layer. In the present specification, the term "optical axis" may refer to a slow axis or fast axis when light passes through a corresponding region, and generally may refer to a slow axis.

The liquid crystal layer includes, for example, a liquid crystal compound, and the liquid crystal compound may be included in a polymerized form. In addition, in the present specification, "the polymerizable liquid crystal compound is included in a polymerized form" may refer to a state where the liquid crystal compound is polymerized to form a backbone such as a main chain or side chain of a liquid crystal polymer in a liquid crystal layer.

The liquid crystal layer may also include the polymerizable liquid crystal compound in a non-polymerized state, or additionally include known additives, such as a stabilizer, a non-polymerizable non-liquid crystal compound, an initiator, or the like.

The liquid crystal film may be applied to various uses. In an illustrative embodiment of the present application, the liquid crystal layer exhibits phase retardation characteristics, and thus, the liquid crystal film may be used in a phase difference film, a viewing angle compensation film, a reflection-type polarizing plate, and the like, which are applied to a display device such as a liquid crystal display device (LCD) and the like. In an illustrative embodiment of the present application, the liquid crystal layer may be a phase retardation layer that exhibits characteristics of a 1/4, 1/2, or 3/4 wavelength layer. In the present specification, the term "n wavelength layer" may refer to a phase retardation element that may retard the phase of light incident on the wavelength layer by n-times.

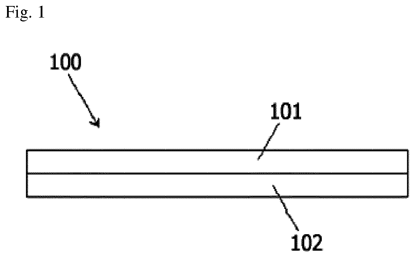

An illustrative liquid crystal film may additionally include a base layer. When the base layer is additionally included, the liquid crystal layer may be formed on at least one side of the base layer. FIG. 1 is a cross-sectional view of an illustrative liquid crystal film 100 and illustrates the case in which a liquid crystal layer 101 is formed on one side of a base layer 102.

Various kinds of base layers may be used. In an illustrative embodiment of the present application, as the base layer, it is possible to use an optically isotropic base layer, an optically anisotropic base layer, such as a phase retardation layer exhibiting phase retardation characteristics and the like, or a polarization element, and the like.

As the optically isotropic base layer, a transparent base layer, such as glass, a transparent plastic base layer, and the like may be used. Examples of a plastic base layer include: a cellulose base layer, such as a diacetyl cellulose (DAC) or triacetyl cellulose (TAC) base layer; a cyclo olefin copolymer (COP) base layer, such as a norbornene derivative resin base layer and the like; an acryl base layer, such as a poly(methyl methacrylate) (PMMA) base layer and the like; a polycarbonate (PC) base layer; an olefin base layer, such as a polyethylene (PE) or polypropylene (PP) base layer, and the like; a polyvinyl alcohol (PVA) base layer; a poly ether sulfone (PES) base layer; a polyetheretherketone (PEEK) base layer; a polyetherimide (PEI) base layer; a polyethylenenaphthalate (PEN) base layer; a polyester base layer, such as a polyethyleneterephthalate (PET) base layer and the like; a polyimide (PI) base layer; a polysulfone (PSF) base layer; a polyarylate (PAR) base layer or a fluoro resin base layer; and the like. The base layer may have, for example, a sheet or film shape.

As the optically anisotropic base layer, for example, the phase retardation layer, for example, a 1/4 wavelength layer, a 1/2 wavelength layer, or the like may be used. The aforementioned phase retardation layer may be a liquid crystal polymer layer that is formed by aligning and polymerizing a polymerizable liquid crystal compound, or a plastic film or sheet to which birefringence is imparted by a stretching or shrinking process.

As the polarization element, a typical element that is known in the art may be used. For example, as the polarization element, it is possible to use an element prepared by adsorbing and aligning a dichroic dye to a polyvinyl alcohol resin.

The base layer may be treated by various surface treatments, such as a low reflection treatment, a reflection-preventing treatment, an anti-glare treatment, and/or a high-resolution anti-glare treatment, and the like, if necessary.

An illustrative liquid crystal film may additionally include an alignment layer between the base layer and the liquid crystal layer. For example, referring to FIG. 1, the liquid crystal film 100 may include an alignment layer as an additional layer between the base layer 102 and the liquid crystal layer 101. The alignment layer may be a layer that serves to align the liquid crystal compound while the liquid crystal film is formed. As the alignment layer, it is possible to use a typical alignment layer known in the art, for example, an alignment layer formed by an imprinting method, a photo alignment layer, a rubbing alignment layer, or the like. The alignment layer has an arbitrary configuration, and it is also possible to impart an aligning property to the base layer by directly rubbing or stretching the base layer without using the alignment layer.

Still another aspect of the present application provides a method for preparing a liquid crystal film. An illustrative method for preparing a liquid crystal film may include applying a coating solution including the liquid crystal composition and forming a liquid crystal layer by aligning a liquid crystal compound of the composition.

The liquid crystal layer may be prepared by a method including forming an alignment layer, forming a coating layer of a coating solution including the liquid crystal composition, and forming a liquid crystal layer by polymerization while the liquid crystal compound of the composition is aligned. The alignment layer may be formed, for example, on the above-described base layer.

The alignment layer may be formed, for example, by a method of rubbing a polymer film, such as polyimide and the like, or coating a photo alignable compound, and then aligning the compound through irradiation with linearly polarized light and the like, or by an imprinting method, such as a nano imprinting method and the like. Various methods of forming an alignment layer, which are capable of aligning a liquid crystal compound, are known in the art.

The coating layer of the liquid crystal composition may be formed by coating the composition on the alignment layer using a known method. In an illustrative embodiment of the present application, the composition may be coated at normal temperature. That is, the coating process of the composition may be performed at a temperature of 15°C to 35°C, 20°C to 25°C, 25°C, or 23°C. When the coating process of the composition is performed in the aforementioned range, it is not necessary to add heat, and thus the process is economical in terms of process, thereby allowing an equipment to be simply manipulated.

The coating layer formed by coating the liquid crystal composition may have fluidity. In an illustrative embodiment of the present application, the coating layer may have a viscosity of 10 cps to 4,000 cps, 10 cps to 3,500 cps, 10 cps to 3,000 cps, 10 cps to 2,500 cps, 10 cps to 2,000 cps, 10 cps to 1,500 cps, 10 cps to 1,000 cps, 10 cps to 500 cps, or 10 cps to 250 cps at normal temperature. As described above, the viscosity may be a viscosity while the liquid crystal composition substantially does not include a solvent. A coating layer having the aforementioned viscosity range facilitates the liquid crystal compound to be aligned according to the alignment pattern of an alignment layer present at a lower portion, and accordingly, it is possible to induce the alignment of a uniform liquid crystal compound. Also, when the coating layer has the viscosity range, the liquid crystal compound may be aligned at normal temperature. In an illustrative embodiment of the present application, the temperature at which the coating layer is aligned may be a temperature of 15°C to 35°C, 20°C to 25°C, 25°C, or 23°C. Thus, it is not necessary to add heat in aligning the liquid crystal composition, and it is possible to solve a problem in the case of adding heat and the like.

The liquid crystal compound aligned according to the alignment pattern of the alignment layer may be subjected to a polymerization process to form a liquid crystal layer. The polymerization process may be carried out under a condition generally performed in the liquid crystal film field.

Yet another aspect of the present application provides a display device. An illustrative display device may include the liquid crystal film. The display device may be, for example, a liquid crystal display device (LCD).

The liquid crystal film may be used for various uses in the display device and the like. For example, the liquid crystal film may be useful as an optical compensation base for a liquid crystal display device. Accordingly, the liquid crystal film may be included as an optical compensation base in the device. In addition, the film may be used as: a phase difference film, such as a super twist nematic (STN) LCD, a thin film transistor-twisted nematic (TFT-TN) LCD, a vertical alignment (VA) LCD, an in-plane switching (IPS) LCD, or the like; a 1/2 wavelength plate; a 1/4 wavelength plate; an inverse wavelength dispersion characteristic film; an optical compensation film; a color filter; a laminate film with a polarizing plate or polarizer; a polarizing plate compensation film; and the like.

A method of configuring a display device by using the film according to the use of the liquid crystal film is not particularly limited. A place where the film is positioned in the device or a method of configuring the device is known in various manners, and all the manners may be applied.

### EFFECT

According to an illustrative liquid crystal composition of the present application, the liquid crystal composition may be uniformly coated at normal temperature without any need for adding heat, and thus the process is economical in terms of process, thereby allowing an equipment to be simply manipulated. Also, according to an illustrative liquid crystal composition, an appropriate fluidity may be secured even after a solvent for the liquid crystal composition is dried, and thus uniform alignment may be induced. Furthermore, according to an illustrative liquid crystal composition, uniform liquid crystal alignment may be performed even while liquid crystals are aligned in a wide area.

### BRIEF DESCRIPTION OF THE DRAWINGS

FIG. 1 is a view schematically illustrating a liquid crystal film according to an illustrative embodiment of the present application.
FIG. 2 is an image of the liquid crystal film prepared in Example 1, which is observed through a polarizing microscope.
FIG. 3 is an image of the liquid crystal film prepared in Comparative Example 2, which is observed through a polarizing microscope.

### DESCRIPTION OF ILLUSTRATIVE EMBODIMENTS

Hereinafter, illustrative embodiments of the present application will be described in detail. However, the present application is not limited to the embodiments disclosed below, but can be implemented in various forms. The following embodiments are described in order to enable those of ordinary skill in the art to embody and practice the present application.

Hereinafter, the liquid crystal composition and the liquid crystal film will be described in detail with reference to Examples and Comparative Examples. However, the scope of the liquid crystal composition and the liquid crystal film is not limited to the embodiments disclosed below.

The following physical properties in Examples and Comparative Examples were evaluated by the following methods.

### 1. Evaluation of uniformity of liquid crystal alignment property

While the transmission axes of two polarizing plates of a polarizing microscope were made orthogonal to each other, a liquid crystal film prepared in Example or Comparative Example was disposed between the two polarizing plates. At this time, the liquid crystal film was disposed such that the optical axis thereof matched the transmission axis of one of the polarizing plates. In the aforementioned state, the degree of light leakage was measured by using CA210 that is an apparatus for measuring brightness between the polarizing plates which were orthogonal to each other. Since the smaller the degree of light leakage is, the better the uniformity of the liquid crystal alignment property is, the uniformity of liquid crystal alignment property of the liquid crystal film was evaluated using the degree of light leakage.

### <Evaluation Criteria>

⊚: Brightness is less than 0.3 cd/m²
O: Brightness is 0.3 cd/m² or more and less than 0.5 cd/m²
X: Brightness is 0.5 cd/m² or more

### Example 1 (not according to the invention)

A composition for forming a photo alignment layer was coated on one side of a TAC base layer (refractive index: 1.49, thickness: 80,000 nm) so as to have a thickness of about 1,000 Å after being dried, and dried at 80°C in an oven for 2 minutes. A composition was prepared by mixing a mixture of polynorbornene (molecular weight (M_{w}) = 150,000) having a cinnamate group of the following Formula A and an acrylic monomer with a photoinitiator (Irgacure 907), and then dissolving the output mixture in a toluene solvent so as to allow the polynorbornene to have a solid concentration of 2% by weight (polynorbornene: acrylic monomer: photoinitiator = 2:1:0.25 (weight ratio)), and the composition was used as the composition for forming a photo alignment layer.

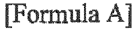

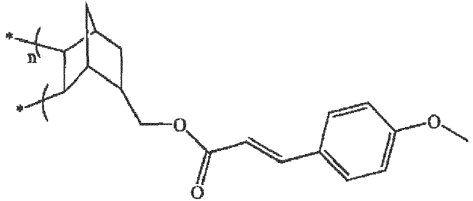

A photo alignment layer was formed by subjecting the dried composition for forming a photo alignment layer to alignment treatment. A wire grid polarizing plate capable of producing linearly polarized light in a predetermined direction was positioned at an upper portion of the dried composition, and the alignment treatment was performed by irradiating ultraviolet rays (300 mW/cm²) on the dried composition for about 30 seconds while the TAC base layer was moved at a rate of about 3 m/min. Subsequently, a liquid crystal layer was formed on the alignment-treated alignment layer. As a liquid crystal composition, a liquid composition including a liquid crystal compound represented by the following Formula B, 5 parts by weight of a compound (melting point -3°C) of the following Formula 4, an appropriate amount of the photoinitiator (Irgacure 907), and 75 parts by weight of the toluene solvent based on 100 parts by weight of the liquid crystal compound was prepared. Subsequently, the liquid crystal composition was applied on the alignment layer at normal temperature so as to have a dried thickness of about 1 µm, thereby forming a coating layer. Thereafter, the coating layer was dried at normal temperature for about 2 minutes. The coating layer had a viscosity of about 2,000 cps at normal temperature, which was measured after being dried. Subsequently, the liquid crystal composition was aligned according to the alignment of the alignment layer at a lower portion, and then a liquid crystal layer was formed by irradiating ultraviolet rays (300 mW/cm²) thereon for about 10 seconds, thereby preparing a liquid crystal film.

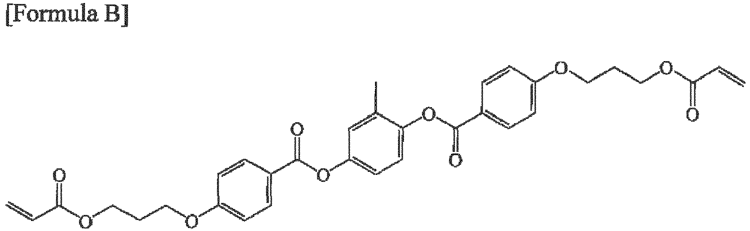

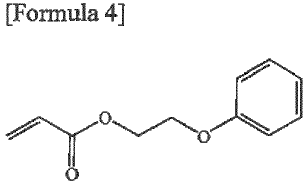

### Example 2 (not according to the invention)

A liquid crystal film was prepared in the same manner as in Example 1, except that a liquid crystal compound represented by the following Formula C was blended instead of the liquid crystal compound represented by Formula B when the liquid crystal composition was prepared.

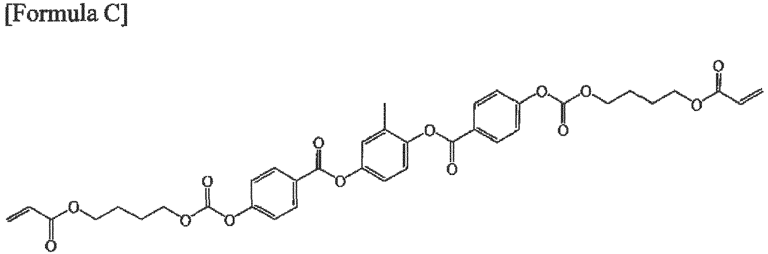

### Example 3 (not according to the invention)

A liquid crystal film was prepared in the same manner as in Example 1, except that a compound represented by the following Formula 5 was blended instead of the compound represented by Formula 4 when the liquid crystal composition was prepared.

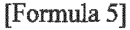

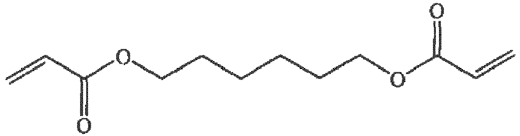

### Example 4 (not according to the invention)

A liquid crystal film was prepared in the same manner as in Example 2, except that a compound represented by the following Formula 5 was blended instead of the compound represented by Formula 4 when the liquid crystal composition was prepared.

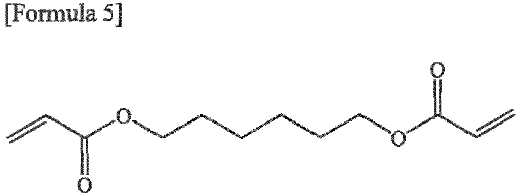

### Example 5 (not according to the invention)

A liquid crystal film was prepared in the same manner as in Example 1, except that a compound represented by the following Formula 6 was blended instead of the compound represented by Formula 4 when the liquid crystal composition was prepared.

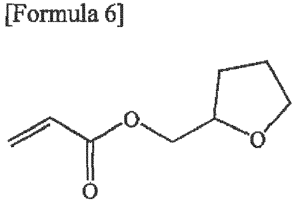

### Example 6

A liquid crystal film was prepared in the same manner as in Example 2, except that a compound represented by the following Formula 6 was blended instead of the compound represented by Formula 4 when the liquid crystal composition was prepared.

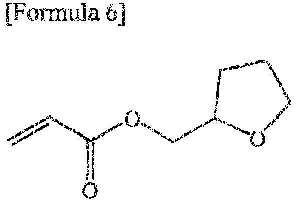

### Example 7 (not according to the invention)

A liquid crystal film was prepared in the same manner as in Example 1, except that a compound represented by the following Formula 7 was blended instead of the compound represented by Formula 4 when the liquid crystal composition was prepared.

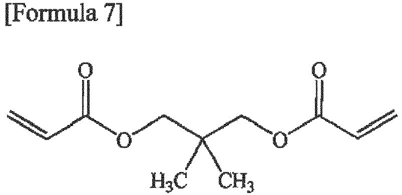

### Example 8 (not according to the invention)

A liquid crystal film was prepared in the same manner as in Example 2, except that a compound represented by the following Formula 7 was blended instead of the compound represented by Formula 4 when the liquid crystal composition was prepared.

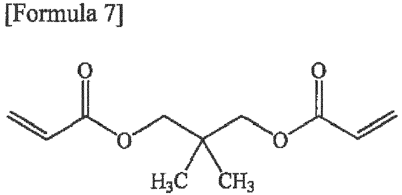

### Comparative Example 1

A liquid crystal film was prepared in the same manner as in Example 1, except that the compound of Formula 4 was not blended when the liquid crystal composition was prepared.

### Comparative Example 2

A liquid crystal film was prepared in the same manner as in Example 2, except that the compound of Formula 4 was not blended when the liquid crystal composition was prepared.

### Comparative Example 3

A liquid crystal film was prepared in the same manner as in Example 1, except that behenyl acrylate was blended instead of the compound of Formula 4 when the liquid crystal composition was prepared.

**[Table 1]**

| | Evaluation results of uniformity of liquid crystal alignment property |
|---|---|
| Example 1 | ⊚ |
| Example 2 | ⊚ |
| Example 3 | ○ |
| Example 4 | ⊚ |
| Example 5 | ○ |
| Example 6 | ⊚ |
| Example 7 | ○ |
| Example 8 | ○ |
| Comparative Example 1 | X |
| Comparative Example 2 | X |
| Comparative Example 3 | X |

### Test Example

The film quality of the liquid crystal film was evaluated by using liquid crystal films in Example 1 and Comparative Example 2 as representative examples.

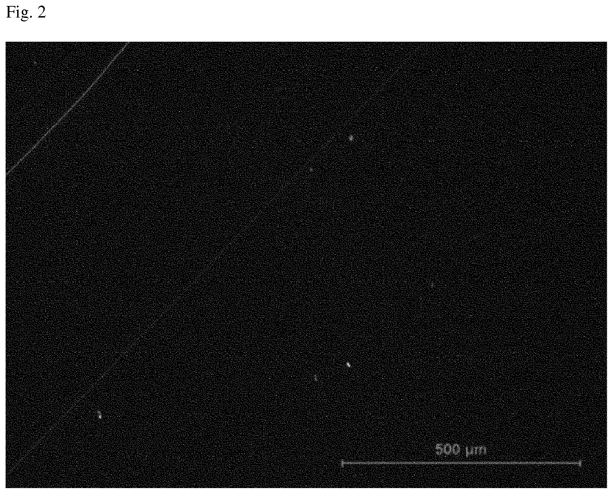

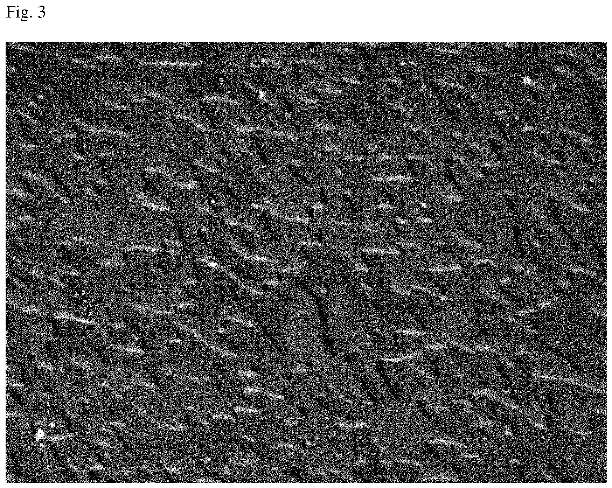

While the transmission axes of two polarizing plates of a polarizing microscope were made orthogonal to each other, a liquid crystal film prepared in Example 1 or Comparative Example 2 was disposed between the two polarizing plates. At this time, the liquid crystal film was disposed such that the optical axis thereof matched the transmission axis of one of the polarizing plates. In the aforementioned state, the surface of the liquid crystal film was observed using the polarizing microscope. FIG. 2 illustrates an image of the liquid crystal film in Example 1 obtained by using the polarizing microscope, and FIG. 3 illustrates an image of the liquid crystal film in Comparative Example 2 obtained by using the polarizing microscope.

## Claims

1. A liquid crystal composition having a viscosity of 1,500 mPa · s (cps) to 2,500 mPa · s (cps) at normal temperature in a state where the liquid crystal composition does not comprise a solvent, the liquid crystal composition comprising:
a liquid crystal compound represented by the following Formula C; and
a compound having a melting point of 20° C or less,
wherein the compound having a melting point of 20°C or less is represented by the following Formula 3: 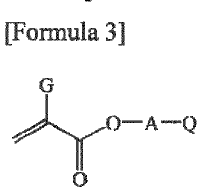
in Formula 3, G is a hydrogen atom or an alkyl group, A is an alkylene group or an alkylidene group, and Q is a monovalent heterocyclic compound,

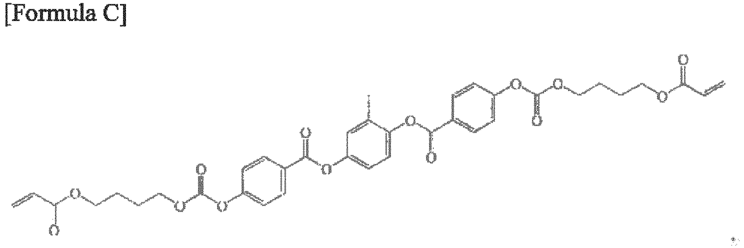

2. The liquid crystal composition of claim 1, wherein the compound having a melting point of 20° C or less has a non-liquid crystal compound.

3. The liquid crystal composition of claim 1, wherein A is an alkylene group or alkylidene group having 1 to 20 carbon atoms, and Q is a monovalent heterocyclic compound having 3 to 8 ring constituent atoms and comprising an oxygen atom or a nitrogen atom as a heteroatom.

4. The liquid crystal composition of claim 1, wherein A is a linear or branched alkylene group or alkylidene group having 1 to 4 carbon atoms, and Q is a monovalent heterocyclic compound having 3 to 8 ring constituent atoms and comprising an oxygen atom or a nitrogen atom as a heteroatom.

5. The liquid crystal composition of claim 1, wherein the compound having a boiling point of 20° C or less is comprised in a ratio of 0.1 to 70 parts by weight based on 100 parts by weight of the liquid crystal compound.

6. A liquid crystal film having a liquid crystal layer formed from the liquid crystal composition of claim 1.

7. A method for preparing a liquid crystal film, comprising:
applying a coating solution comprising the liquid crystal composition of claim 1; and
aligning the liquid crystal compound of the composition.

8. The method of claim 7, wherein the coating solution comprising the liquid crystal composition is applied at 15° C to 35° C.

9. The method of claim 7, wherein the liquid crystal compound is aligned at 15° C to 35° C.

10. A display device comprising the liquid crystal film of claim 6.

## Patentansprüche

1. Flüssigkristallzusammensetzung mit einer Viskosität von 1.500 mPa · s (cps) bis 2.500 mPa · s (cps) bei normaler Temperatur in einem Zustand, wo die Flüssigkristallzusammensetzung ein Lösungsmittel nicht umfasst, wobei die Flüssigkristallzusammensetzung umfasst:
eine Flüssigkristallverbindung, dargestellt durch die folgende Formel C; und
eine Verbindung mit einem Schmelzpunkt von 20°C oder weniger,
wobei die Verbindung mit einem Schmelzpunkt von 20°C oder weniger durch die folgende Formel 3 dargestellt ist: 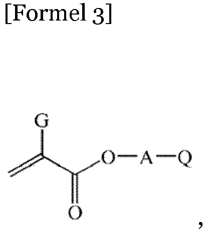
wobei in Formel 3 G ein Wasserstoffatom oder eine Alkylgruppe ist, A eine Alkylengruppe oder eine Alkylidengruppe ist und Q eine einwertige heterozyklische Verbindung ist,

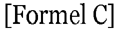

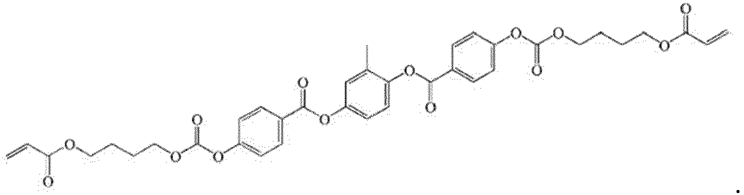

2. Flüssigkristallzusammensetzung nach Anspruch 1, wobei die Verbindung mit einem Schmelzpunkt von 20°C oder weniger eine NichtFlüssigkristallverbindung aufweist.

3. Flüssigkristallzusammensetzung nach Anspruch 1, wobei A eine Alkylengruppe oder Alkylidengruppe mit 1 bis 20 Kohlenstoffatomen ist und Q eine einwertige heterozyklische Verbindung mit 3 bis 8 Ringbildungsatomen und umfassend ein Sauerstoffatom oder ein Stickstoffatom als ein Heteroatom ist.

4. Flüssigkristallzusammensetzung nach Anspruch 1, wobei A eine lineare oder verzweigte Alkylengruppe oder Alkylidengruppe mit 1 bis 4 Kohlenstoffatomen ist und Q eine einwertige heterozyklische Verbindung mit 3 bis 8 Ringbildungsatomen und umfassend ein Sauerstoffatom oder ein Stickstoffatom als ein Heteroatom ist.

5. Flüssigkristallzusammensetzung nach Anspruch 1, wobei die Verbindung mit einem Siedepunkt von 20°C oder weniger in einem Verhältnis von 0,1 bis 70 Gewichtsteilen, basierend auf 100 Gewichtsteilen der Flüssigkristallverbindung, umfasst ist.

6. Flüssigkristallfolie mit einer Flüssigkristallschicht, gebildet aus der Flüssigkristallzusammensetzung nach Anspruch 1.

7. Verfahren zum Herstellen einer Flüssigkristallfolie, umfassend:
Auftragen einer Beschichtungslösung, umfassend die Flüssigkristallzusammensetzung nach Anspruch 1; und
Ausrichten der Flüssigkristallverbindung der Zusammensetzung.

8. Verfahren nach Anspruch 7, wobei die Beschichtungslösung, umfassend die Flüssigkristallzusammensetzung, bei 15°C bis 35°C aufgetragen wird.

9. Verfahren nach Anspruch 7, wobei die Flüssigkristallverbindung bei 15°C bis 35°C ausgerichtet wird.

10. Displayvorrichtung, umfassend die Flüssigkristallfolie nach Anspruch 6.

## Revendications

1. Une composition de cristaux liquides ayant une viscosité comprise entre 1500 mPa • s (cps) et 2500 mPa • s (cps) à température normale dans un état où une composition de cristaux liquides ne comprend pas de solvant, une composition de cristaux liquides comprenant :
un composé de cristaux liquides représenté par la Formule C ci-après ; et
un composé ayant un point de fusion égal ou inférieur à 20°C,
dans laquelle le composé ayant un point de fusion égal ou inférieur à 20°C est représenté par la Formule 3 ci-après : 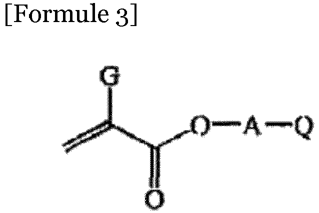
dans la Formule 3, G est un atome d'hydrogène ou un groupe alkyle, A est un groupe alkylène ou un groupe alkylidène et Q est un composé hétérocyclique monovalent,

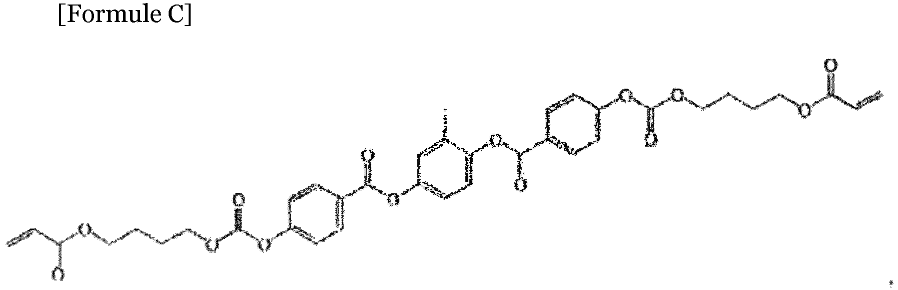

2. Une composition de cristaux liquides selon la revendication 1, dans laquelle le composé ayant un point de fusion égal ou inférieur à 20°C a un composé de cristaux non liquides.

3. Une composition de cristaux liquides selon la revendication 1, dans laquelle A est un groupe alkylène ou un groupe alkylidène ayant 1 à 20 atomes de carbone et Q est un composé hétérocyclique monovalent ayant 3 à 8 atomes constitutifs d'un cycle et comprenant un atome d'oxygène ou un atome d'azote comme hétéroatome.

4. Une composition de cristaux liquides selon la revendication 1, dans laquelle A est un groupe alkylène ou un groupe alkylidène linéaire ou ramifié ayant 1 à 4 atomes de carbone et Q est un composé hétérocyclique monovalent ayant 3 à 8 atomes constitutifs d'un cycle et comprenant un atome d'oxygène ou un atome d'azote comme hétéroatome.

5. Une composition de cristaux liquides selon la revendication 1, dans laquelle le composé ayant un point d'ébullition égal ou inférieur à 20°C est dans un rapport compris entre 0,1 et 70 parties en poids sur la base de 100 parties en poids du composé de cristaux liquides.

6. Un film de cristaux liquides ayant une couche de cristaux liquides formée à partir d'une composition de cristaux liquides selon la revendication 1.

7. Un procédé de préparation d'un film de cristaux liquides, consistant à :
appliquer une solution de revêtement comprenant la composition de cristaux liquides selon la revendication 1 ; et
aligner le composé de cristaux liquides de la composition.

8. Le procédé selon la revendication 7, dans lequel la solution de revêtement comprenant la composition de cristaux liquides est appliquée entre 15°C et 35°C.

9. Le procédé selon la revendication 7, dans lequel le composé de cristaux liquides est aligné entre 15°C et 35°C.

10. Un écran de visualisation comprenant le film de cristaux liquides selon la revendication 6.
